(19) Europäisches Patentamt
European Patent Office
Office européen des brevets

(11) Publication number: 0 275 130 A2

# (12) EUROPEAN PATENT APPLICATION

(21) Application number: 88200042.5

(22) Date of filing: 13.01.88

(51) Int. Cl.$^4$: C 09 D 11/10

(30) Priority: 15.01.87 NL 8700079

(43) Date of publication of application: 20.07.88 Bulletin 88/29

(84) Designated Contracting States: AT BE CH DE ES FR GB IT LI NL

(71) Applicant: STAMICARBON B.V.
Mijnweg 1
NL-6167 AC Geleen (NL)

(72) Inventor: Runavot, Yves
204, Boulevard de Creteil
F-94100 Saint Maur des Fosses (FR)

Salemis, Philippe
Boomkensdiep 50
NL-8032 XX Zwolle (NL)

Chassereau, Daniel
Logis de Montefault
F-79340 Menigoute (FR)

## (54) Printing ink composition.

(57) The invention relates to a printing ink composition based on a resinous polymer composition.

The resinous polymer compostion contains 10-70% (wt) vinylaromatic hydrocarbon monomers and 1-50% (wt) paramethylstyrene, the amount of paramethylstyrene equalling at least any amount of metamethylstyrene present in the polymer composition.

EP 0 275 130 A2

## Description

### PRINTING INK COMPOSITION

The invention relates to a printing ink composition based on a resinous polymer composition containing one or more vinylaromatic hydrocarbon monomers, one or more pigments, one or more solvents, and other customary additives. Optionally the resinous polymer composition may contain one or more other polymerizable compounds, such as substituted benzene compounds, unsaturated carboxylic acid compounds and conjugated diene compounds.

Such a composition is known from US-A-4028119. In this publication is described a multistep process for preparing resins for the production of printing inks, in which process 50-100% (wt) dicyclopentadiene is polymerized with 50-0% (wt) of a vinylaromatic hydrocarbon monomer in the presence of a Friedel-Crafts polymerization catalyst, subsequently 1-20% (wt) of an alpha, beta-unsaturated carboxylic acid or its anhydride, based on the weight of the resulting polymer, is added to the resulting polymer and the resulting adduct is then at least in part esterified with a polyhydroxy alcohol.

Printing inks are mostly suspensions of one or more finely dispersed solid pigments in a solution (of a suitable fluidity) of a substrate and at the same time film-forming binding agent. Resins used as binding agents in printing ink compositions have the task to surround the pigment particles, to impart to the printing ink a viscosity and/or tack (stickiness) suitable for its processing, to take care that the pigment particles continue to be properly wetted and that, by pounding, they are permanently anchored to the material to be printed. The ink must be capable of being well processed on the printing press and on the paper, in other words the rheology must comply with accurate requirements (misting, plucking, mottling, etc.). Further, as far as adhesion and drying are concerned, it is important that blocking, chalking, blurring, etc. should not occur. In so far as its performance characteristics are concerned, the ink must be, for instance, non-fading, moisture resistant, resistant to chalking, scratching, chemicals and heat and capable of being sterilized and of being deep-drawn. In connection with environmental requirements, by virtue of which various solvents, such as aromatic hydrocarbons, must be replaced, which serve as solvents in intaglio printing and offset printing.

The requirements imposed in respect of all these characteristics become more and more severe, which implies that novel printing ink compositions must be searched for containing binders improving the properties of the ink.

The object of the invention is to improve a printing ink composition based on a resinous polymer composition containing one or more vinyl-aromatic hydrocarbon monomers, one or more pigments, one or more solvents and other customary additives such that the properties of the printing ink composition are improved.

The printing ink composition according to the invention is characterized in that the resinous polymer composition contains 10-70% (wt) vinylaromatic hydrocarbon monomers and 1-50% (wt) paramethylstyrene, the amount of paramethylstyrene equalling at least any amount of metamethylstyrene present in the polymer composition.

It is very surprising indeed for the use of paramethylstyrene to result in a resin which has a good solubility in aliphatic solvents and which shows improved characteristics, such as rub resistance and gloss. Moreover, the resinous polymer composition can be prepared via a one-step process.

According to a preferred embodiment of the invention the resinous polymer composition contains 10-70% (wt) vinyl-aromatic hydrocarbon monomers, 10-50% (wt) hydrocarbon monomers with a polymerizable unsaturation and 1-50% (wt) paramethylstyrene, the amount of paramethylstyrene being at least equal to any amount of metamethylstyrene present in the polymer composition.

According to another preferred embodiment of the invention the polymer composition contains 3-35% (wt) paramethylstyrene.

In the non-prepublished NL-A-8502135 resinous polymer compositions are described based on a vinyl-aromatic hydrocarbon monomer and at least one other hydrocarbon monomer with a copolymerizable unsaturation, which polymer composition comprises at least 5% (wt) paramethylstyrene in an amount equalling at least any amount of metamethylstyrene present in the said polymer composition. The application described is the use of these polymer compositions in hot-melt adhesives.

According to a preferred embodiment of the invention the chosen vinyl-aromatic hydrocarbon monomers are monomers with more than 7 carbon atoms released in the cracking of a petroleum fraction, preferably styrene, α-methylstyrene, methamethylstyrene, orthomethylstyrene, vinyltoluene (a mixture consisting, in addition to 1/3 by weight paramethylstyrene, of about 2/3 by weight metamethylstyrene), or mixtures thereof. The amount by weight of the vinyl-aromatic monomers in the polymer composition is between 10 and 70% (wt), preferably between 30 and 60% (wt). It is possible to use the pure compounds, but it is an advantage also to use the technical grades or concentrates with at least 60% (wt), or preferably 80% (wt), of one or more vinylaromatic compounds.

Generally, heavy petroleum fractions, such as light naphtha, heavy naphtha and gasoil, can be cracked in a short space of time at a relatively low pressure in the presence of steam at a temperature between 500° C and 900° C. Hydrocarbon monomers obtained by such a steam-cracking process mostly consist of predominating amounts of unsaturated hydrocarbons (i.e. alkenes, alkadienes and aromatic hydrocarbons) and minor amounts of saturated hydrocarbons (i.e. alkane and naphtene hydrocarbons).

According to a further preferred mode of realizing

the invention dicyclopentadiene compounds, indene compounds and/or terpene compounds have been chosen as hydrocarbon monomers with a polymerizable unsaturation. The amount by weight of this hydrocarbon monomer in the polymer composition is between 10 and 50% (wt), preferably between 30 and 40% (wt).

Dicyclopentadiene compounds that can be used are, for instance, unsubstituted dicylopentadiene and substituted dicyclopentadiene. The substituents can be chosen from alkyl, hydroxyl and halogen. The dicyclopentadiene compounds can be used in the form of the pure chemical compound, but it is often an advantage to use a concentrate or a technical grade with 60% (wt), or preferably 80% (wt) or more, of the compound.

Indene compounds that can be used are, for instance, unsubstituted indene and substituted indene. The substituents can be chosen from alkyl, hydroxyl and halogen. Here again concentrations or technical grades with 60% (wt), or preferably 80% (wt) or more, of the compound can be applied.

Terpene compounds that can be applied are β-pinene, α-pinene, limonene, carene and compounds like dipentenes. Mostly a concentrate or a technical grade with 60% (wt), or preferably 80% (wt) or more, of a terpene compound can be applied.

Substituted benzene compounds that may be present in the polymer composition are mono, di and tri-substituted benzene, the substituents being chosen from $C_1$-$C_{12}$ alkyl, hydroxyl and halogen.

Examples of suitable substituted benzene compounds are phenols possibly having the following structural formula:

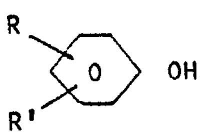

where R and R′ represent, independently of each other, hydrogen or a $C_1$-$C_{12}$ alkyl group, preferably a $C_6$-$C_{10}$ alkyl group. They can be used in the form of technical compounds (purity higher than 95%).

Other examples of suitable substituted benzene compounds include toluene, ethylbenzene, xylenes, mesitylene, trimethylbenzenes and other alkylbenzenes. The amount of substituted benzene in the polymers may range between 2 and 15% (wt), and preferably between 3 and 10% (wt).

During the polymerization, unsatured carboxylic acid compounds, for instance, unsaturated monocarboxylic acids and $C_1$-$C_{12}$ alkylesters thereof, unsaturated dicarboxylic acids and acid anhydri des, such as acrylic and methacrylic acids and esters thereof, particularly 2-ethylhexylacrylate, and maleic anhydride may also be incorporated by polymerization. The amount of unsaturated acid compound may range between 2 and 20% (wt).

The resinous polymer composition and notably the composition based on paramethylstyrene and dicyclopentadiene compounds may contain units derived from conjugated diene compounds. Diene compounds are, for instance, pentadiene, and preferably piperylene, i.e. 1,3-pentadiene (cis and trans). Pure piperylene can be used, but usually technical grade pentadiene or piperylene concentrates with more than 45% pure pentadiene can be applied, provided they contain less than 5% isoprene, the rest consisting of monoenes, dicyclopentadiene, methylcyclopentadiene and non-polymerisable products. The amount of diene compound may range between 2 and 20% (wt) and preferably between 3 and 10% (wt).

The printing ink composition according to the invention preferably contains a resinous copolymer composition which has been subjected to cationic polymerization. In such a polymerization process monomers having at least 1 double bond are cationically polymerized, using a cation-active polymerization catalyst, such as a Brφnsted acid or a Lewis acid. Examples of these monomers are vinylaromatic hydrocarbon monomers with 8-12 carbon atoms, for instance styrene, vinyltoluene, tert-butylstyrene or alphamethylstyrene; aromatic cyclic vinyl monomers, for instance indene or methylindene, aliphatic alkamonoenes with 4-12 carbon atoms, for instance butene, pentene or hexene, aliphatic alkadienes with 4-12 carbon atoms, for instance butadiene or isoprene and unsaturated alicyclic hydrocarbons with 5-15 carbon atoms, for instance cyclopentadiene, methyldicyclopentadiene, norbornene, alkylnorbornene, alkenylnorbornene or mixtures thereof.

According to an advantageous embodiment of the invention it is also possible to use a fraction with a boiling point between 40°C and 300¤C containing unsaturated hydrocarbon monomers, preference being given to a fraction with a boiling point between 100°C and 220°C containing between 40 and 80% (wt) aromatic hydrocarbon monomers, which are obtained as by-products in the cracking or reforming of petroleum.

A fraction boiling above 140°C, containing at least 8 carbon atoms and prepared by continuous fractionated distillation from hydrocarbon fractions in order to remove a fraction containing 1-7 carbon atoms, contains large amounts of unsaturated hydrocarbons. A fraction boiling between 100°C and 220°C may have the following composition:

1. Styrene and derivatives: 0.5-10% (wt)
2. Vinyltoluene : 5-25% (wt)
3. Indene and derivatives : 10-30% (wt)
4. Other : 5-15% (wt)

The resinous polymer composition applied according to the invention can be polymerized in any manner known in the art using, for instance, Friedel-Crafts polymerization catalysts, for instance aluminium halides, titanium halides, tin halides, boron fluoride and complexes of boron fluoride with alcohols, phenols, carboxylic acids or ethers.

This polymerization can proceed, if so desired, in the absence of a solvent, or in an inert organic solvent, such as an aliphatic or aromatic hydrocarbon, for instance hexane, heptane, pentane, toluene or xylene. The polymerization can be carried out at temperatures between, for instance, -30°C and 100°C and preferably between 20°C and 50°C. The time required for the polymerization is not critical

either and may range between 0.5 and 10 hours, while the polymerization is carried out at atmospheric, elevated or reduced pressures (for instance between 0.1 and 1000 Pa).

In view of the exothermal nature of the reaction, it may be well-advised to add the catalyst slowly. Special measures may be necessary to regulate the temperature during the reaction in order to obtain good and reproducible technical results. The reaction mixture is kept at the desired reaction temperature for several hours, after which the catalyst is destroyed, preferably by the addition of a base and by washing, after which the volatile substances, for instance solvent and any non-converted starting material, are removed.

The weight average molecular weight of the polymers is preferably between 400 and 2000.

The printing ink composition according to the invention containing a resinous polymer composition with softening point (measured according to ASTM-E-28) between 150° C and 200° C and a colour (measured according to ASTM-D-1544) between 6 and 18 has excellent properties, such as gloss, rub resistance and solubility in aliphatic hydrocarbon solvents.

The invention further relates to a process for preparing a printing ink composition by mixing a resinous polymer composition, one or more pigments, for instance organic pigments, one or more solvents, for instance aliphatic hydrocarbons, and other customary additives, the resinous polymer composition applied being a polymer composition as described hereinbefore.

The invention is further elucidated by means of the following examples without, however, being limited hereto.

Example I

a. Preparation of the resinous polymer

Into a reactor of 1.5 litres 1000 parts by weight of a petroleum fraction (with a boiling point between 100° C and 220° C) with 9 carbon atoms, 50 parts by weight paramethylstyrene and 250 parts by weight toluene are introduced. The polymerization is carried out with 6 parts by weight gaseous boron fluoride as catalyst, while the temperature is kept at 35° C. After this the catalyst is neutralized using sodium hydroxide solution, washed with water and the volatile substances are removed by distillation.

The resulting resinous polymer composition has a softening point of 160° C (measured according to ASTM-E-28) and a colour (Gardner, ASTM-D-1544) of 11.

b. Intaglio printing ink composition in aliphatic solvent

A printing ink composition composed of 80% (wt) of the polymer obtained under a. dissolved in white spirit (with less than 5% (wt) aromatics), 6% (wt) pigment (rubis lithol, pigment red c.i. 57) and 14% (wt) white spirit (with less than 5% aromatics) has the following properties:

- gloss :65%
- optical density at 30 µm :1.35
- optical density at 20 µm :1.17
- rub resistance (Sorensen) :50 sec.

Example II

a. Preparation of the resinous polymer

Example I is repeated except for the amount by weight of paramethylstyrene, which is 300 parts by weight instead of 50 parts by weight.

The resulting resinous polymer composition has a softening point of 180° C and a colour of 6.7.

b. Intaglio printing ink composition in aliphatic solvent

A printing ink composition composed in the same way as in example I, has the following properties:

- gloss : 75%
- optical density at 30 µm : 1.45
- optical density at 20 µm : 1.25
- rub resistance (Sorensen) : 63 sec.

Comparative example 1

a. Preparation of the resinous polymer

Example Ia is repeated without paramethylstyrene.

The resulting resinous polymer composition has a softening point of 155° C and a colour of 15.

b. Intaglio printing ink composition in aliphatic solvent

A printing ink composition composed in the same way as in example I has the following properties:

- gloss : 60%
- optical density at 30 µm : 1.30
- optical density at 20 µm : 1.15
- rub resistance (Sorensen) : 40 sec.

**Claims**

1. Printing ink composition based on a resinous polymer composition containing one or more vinyl-aromatic hydrocarbon monomers, one or more pigments, one or more solvents, and other customary additives, characterized in that the resinous polymer composition contains 10-70% (wt) vinyl-aromatic hydrocarbon monomers and 1-50% (wt) paramethylstyrene, the amount of paramethylstyrene equalling at least any amount of methamethylstyrene present in the polymer composition.

2. Printing ink composition according to claim 1, characterized in that the resinous polymer composition contains 10-70% (wt) vinylaromatic hydrocarbon monomers, 10-50% (wt) hydrocarbon monomers with a polymerizable unsaturation and 1-50% (wt) paramethylstyrene, the amount of paramethylstyrene being at least equal to any amount of metamethylstyrene present in the polymer composition.

3. Printing ink composition according to any one of claims 1-2, characterized in that the polymer composition contains 3-35% (wt) paramethylstyrene.

4. Printing ink composition according to any one of claims 1-3, characterized in that the chosen vinyl-aromatic hydrocarbon monomers are monomers with more than 7 carbon atoms released in the cracking of a petroleum fraction.

5. Printing ink composition according to claim 4, characterized in that the vinyl-aromatic hydrocarbon monomers are chosen from styrene, α-methylstyrene, metamethylstyrene, orthomethylstyrene, vinyl toluene or mixtures thereof.

6. Printing ink composition according to any one of claims 2-5, characterized in that the hydrocarbon monomers with a polymerizable unsaturation are chosen from dicyclopentadiene compounds, indene compounds and/or terpene compounds.

7. Printing ink composition according to any one of claims 1-6, characterized in that the polymer composition has been cationi cally polymerized.

8. Process for preparing a printing ink composition by mixing a resinous polymer composition, one or more pigments, one or more solvents and other customary additives, characterized in that the resinous polymer composition contains 10-70% (wt) vinyl-aromatic hydrocarbon monomers and 1-50% (wt) paramethylstyrene, the amount of paramethylstyrene equalling at least any amount of metamethylstyrene present in the polymer composition.

9. Process according to claim 8, characterized in that the resinous polymer composition contains 10-70% (wt) vinyl-aromatic hydrocarbon monomers, 10-50% (wt) hydrocarbon monomers with a polymerizable unsaturation and 1-50% (wt) paramethylstyrene, the amount of paramethylstyrene equalling at least any amount of metamethylstyrene present in the polymer composition.